# FASCICULE DE BREVET EUROPEEN

(11) **EP 3 774 595 B1**
(45) Date de publication et mention de la délivrance du brevet: **04.12.2024**
(21) Numéro de dépôt: 19712783.0
(22) Date de dépôt: 26.03.2019
(51) Int. Cl.: B65D 85/804

(54) **CAPSULE DESTINÉE À RECEVOIR UNE SUBSTANCE POUR LA PRÉPARATION D'UNE BOISSON**
KAPSEL FÜR EINE SUBSTANZ ZUR ZUBEREITUNG VON GETRÄNKEN
CAPSULE FOR RECEIVING A SUBSTANCE FOR THE PREPARATION OF A BEVERAGE

(30) Priorité: 26.03.2018 LU 100748
(43) Date de publication de la demande: 17.02.2021
(73) Titulaire: Brain Corp S.A., 3841 Schifflange (LU)
(72) Inventeur: BRIVOIS, Olivier, 75017 Paris (FR)
(74) Mandataire: Sayettat, Julien Christian
(86) Numéro de dépôt international: PCT/EP2019/057608
(87) Numéro de publication internationale: WO 2019/185637

(56) Documents cités:
- WO-A1-2013/029184
- WO-A1-2015/082982
- WO-A1-2017/025622
- JP-A- H05 199 938
- US-A1- 2012 097 602

## Description

L'invention concerne une capsule destinée à recevoir une substance pour la préparation d'une boisson.

On connait des capsules avec un corps pouvant être fabriqué par moulage, notamment par injection d'une matière plastique dans un moule prévu à cet effet. Le corps présente un fond et une paroi latérale, ainsi qu'un rebord entourant une ouverture supérieure et destiné à être couvert par un opercule après chargement de la substance dans ladite capsule par ladite ouverture supérieure.

De telles capsules sont notamment destinées à la préparation d'une boisson chaude de type café, thé ou infusion. Pour ce faire, une capsule est installée dans le logement d'une machine prévue à cet effet, où elle est tenue par un piston pendant le passage d'un liquide extracteur, par exemple de l'eau chaude, à travers elle et la substance qu'elle contient, après le perçage de son fond par les picots dudit piston.

Pour préserver les propriétés organoleptiques de la substance, il est nécessaire de la conserver dans une capsule avec des bonnes propriétés de barrière contre l'oxygène et l'humidité de l'air.

Pour ce faire, on connait des matières plastiques imperméables, notamment aux gaz, mais celles-ci ne sont pas adaptées à la fabrication d'une capsule, dans la mesure où elles s'avèrent difficiles à injecter, en plus d'être relativement coûteuses. En outre, ces matières plastiques ne sont généralement pas recyclables, ce qui pose problème par rapport au traitement des déchets.

On connait également des capsules dont le corps est réalisé en un matériau plastique compostable et/ou biodégradable, voir WO2015/ 082982 A1 par exemple. Toutefois, un tel corps présente généralement une porosité importante.

L'invention vise à perfectionner l'art antérieur en proposant une capsule agencée pour présenter de bonnes propriétés d'étanchéité, notamment à l'air, tout en étant facilement compostable, tant au niveau industriel que domestique.

A cet effet, l'invention propose une capsule destinée à recevoir une substance pour la préparation d'une boisson, ladite capsule comprenant un corps en matériau compostable selon la norme EN 13432, et étant équipée d'au moins un film d'étanchéité présentant au moins une couche en matériau compostable et au moins une couche de scellage sur le corps, ledit film d'étanchéité présentant un taux de transmission d'oxygène d'au plus 5 cm³/m².jour.atm selon la norme ASTM F1927.

D'autres particularités et avantages de l'invention apparaîtront dans la description qui suit, faite en référence aux figures annexées, dans lesquelles :
- les figures 1a et 1b représentent schématiquement en perspective le corps d'une capsule selon l'invention, respectivement en vue de dessous (figure 1a) et en vue de dessus (figure 1b) ;
- les figures 2a et 2b représentent schématiquement en coupe longitudinale partielle le corps de capsule des figures 1a et 1b, avec un agrandissement respectivement de la partie supérieure (figure 2a) et de la partie inférieure (figure 2b) dudit corps ;
- la figure 3 représente schématiquement en perspective éclatée un film d'étanchéité d'une capsule selon l'invention ;
- la figure 4 représente schématiquement en vue de face une étiquette latérale réalisée à partir du film d'étanchéité de la figure 3 ;
- la figure 5 représente schématiquement en perspective vue de dessus une capsule selon l'invention comprenant le corps des figures 1a et 1b et l'étiquette latérale de la figure 4 ;
- les figures 6a, 6b et 6c représentent chacune schématiquement en coupe longitudinale partielle une étape de fabrication d'une capsule selon l'invention.

En relation avec ces figures, on décrit ci-dessous une capsule destinée à recevoir une substance pour la préparation d'une boisson.

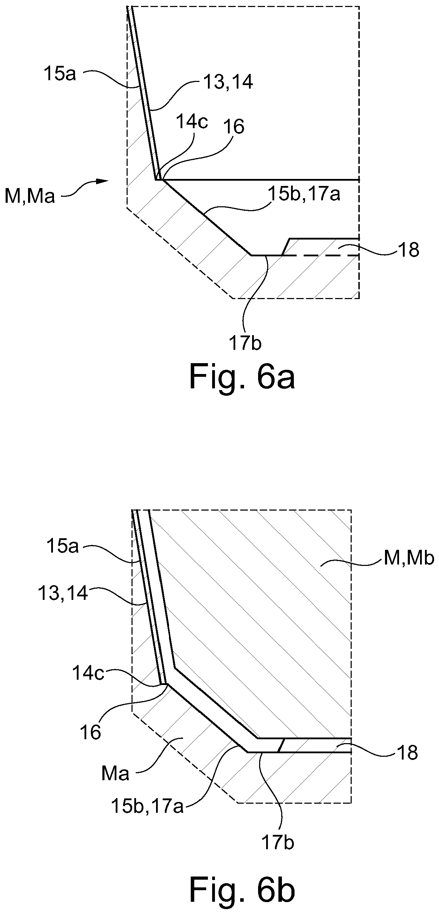

La capsule comprend un corps 1 qui peut être fabriqué par moulage, notamment par injection d'une matière plastique dans un moule M tel que représenté sur les figures 6a et 6b. Le corps 1 présente un fond 2 et une paroi latérale 3, ainsi qu'un rebord 4 entourant une ouverture supérieure 5 et destiné à être couvert par un opercule supérieur après chargement de la substance dans ladite capsule par ladite ouverture supérieure.

En particulier, la capsule est destinée à la préparation d'une boisson chaude de type café, thé ou infusion. Pour ce faire, la capsule peut être installée dans le logement d'une machine prévue à cet effet, afin d'y être tenue par un piston muni de picots pour percer le fond 2 de ladite capsule. En outre, l'opercule supérieur est traversé par au moins une broche pour injecter du liquide extracteur, notamment de l'eau chaude, à travers la capsule et la substance qu'elle contient, afin de finaliser la préparation de la boisson.

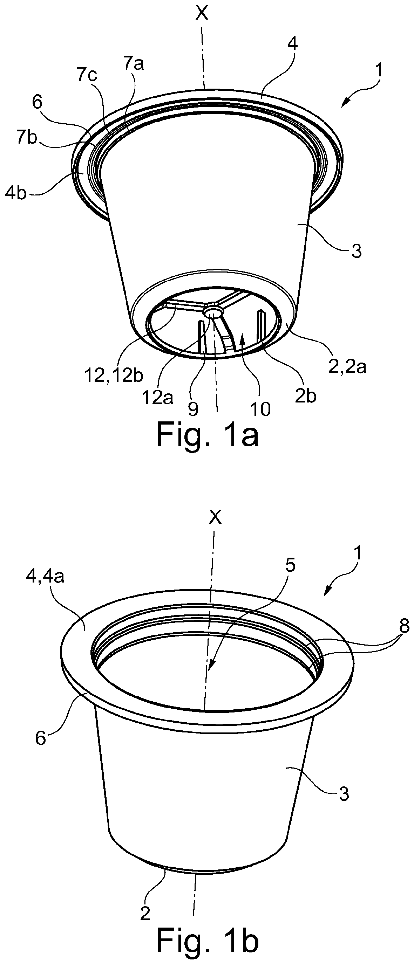

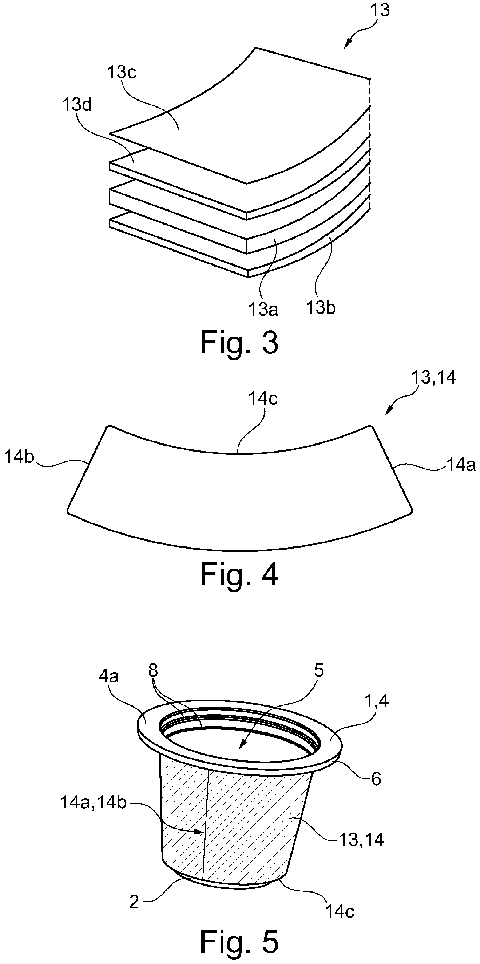

Le corps 1 présente une géométrie de révolution autour d'un axe central X. Sur les figures 1a, 1b et 5, le corps 1 présente notamment une paroi latérale 3 qui s'inscrit globalement dans un tronc de cône à génératrice droite entre le fond 2 et le rebord supérieur 4.

Le rebord supérieur 4 présente une paroi supérieure 4a lisse sur laquelle un opercule supérieur est destiné à être fixé, notamment au moyen d'un adhésif, afin d'obstruer l'ouverture supérieure 5 après chargement de la substance pour la préparation d'une boisson.

Le rebord supérieur 4 présente également une paroi inférieure 5b dont le bord extérieur libre est bordé par une couronne 6 de rigidification, et dont la portion intérieure, qui est reliée au bord supérieur de la paroi latérale 3, comprend des couronnes intérieure 7a et extérieure 7b de sections sensiblement triangulaires, entre lesquelles s'étend une lèvre d'étanchéité 7c, également de section triangulaire. Une telle structure est décrite plus en détail dans le document EP-2 966 006.

Lors de la disposition de la capsule dans le logement d'une machine, le bord périphérique du piston (non représenté) se positionne entre les couronnes extérieure 7b et intérieure 7a en écrasant la lèvre d'étanchéité 7c, l'ensemble piston - couronnes 7a, 7b - lèvre 7c formant une chicane d'étanchéité pour limiter les fuites lors de l'injection du liquide extracteur dans la capsule.

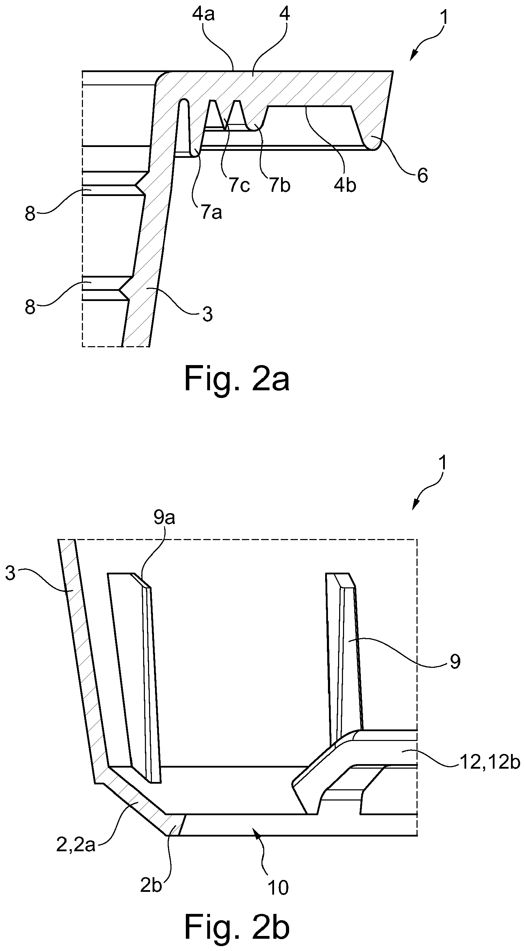

En relation avec les figures 1b et 2a, la paroi latérale 3 comprend des nervures circulaires intérieures 8 formées à proximité de l'ouverture supérieure 5, lesdites nervures étant agencées pour permettre l'extraction de la capsule de son moule M de fabrication.

En outre, comme représenté sur les figures 1a et 2b, la paroi latérale 3 comprend des consoles intérieures 9 formées à proximité du fond 2 et équiréparties angulairement, chaque console 9 étant pourvue d'une surface supérieure 9a d'appui destinée à recevoir le fond d'une capsule emboîtée. Ainsi, les capsules peuvent être conditionnées en lots par emboîtement les unes dans les autres après leur fabrication, afin d'être fournies à des producteurs pour leur chargement ultérieur avec une substance pour la préparation d'une boisson.

Dans le mode de réalisation représenté, le fond 2 comprend une ouverture centrale 10 destinée à être recouverte par un opercule inférieur 11 pour former la capsule, ledit opercule inférieur étant destiné à être percé par les picots du piston lors de la préparation d'une boisson. En particulier, le fond 2 comprend une couronne supérieure 2a reliée au bord inférieur de la paroi latérale 3 tronconique, ainsi qu'une couronne inférieure 2b entourant l'ouverture centrale 10.

Le fond 2 comprend en outre un croisillon 12 qui présente un moyeu central 12a relié à la couronne supérieure 2a par trois branches 12b. Les branches 12b sont incurvées vers le haut de manière à entrer dans le volume intérieur de la capsule en étant écartées du fond 2 d'une distance suffisante pour éviter tout contact avec les picots du piston lors de l'utilisation de ladite capsule pour préparer une boisson. En outre, les consoles 9 sont agencées pour que leurs surfaces d'appui 9a respectives s'étendent au-dessus du croisillon 12, afin d'éviter le contact entre ledit croisillon et le fond d'une capsule emboîtée, et ainsi l'endommagement par ledit croisillon de l'opercule inférieur recouvrant ledit fond.

Comme expliqué dans le document WO-2017/025622, le croisillon 12 sert à l'injection de la matière plastique dans le moule M pour la fabrication du corps 1. Plus précisément, le moyeu central 12a correspond au point d'entrée de la matière plastique injectée dans le moule M, tandis que les branches 12b permettent la répartition de ladite matière plastique consécutivement vers la couronne supérieure 2a, la paroi latérale tronconique 3 et le rebord supérieur 4.

De façon avantageuse, les branches 12b sont équiréparties angulairement autour du moyeu central 12a et présentent chacune une section de dimensions adaptées pour faciliter le passage de la matière plastique sous pression jusqu'aux endroits les plus éloignés du point d'injection.

Afin de faciliter le traitement des déchets contenant des capsules, le corps 1 est réalisé à base d'un matériau compostable selon la norme EN 13432.

En particulier, le matériau constituant le corps 1 est choisi pour permettre aussi bien un compostage industriel que domestique, et peut être biodégradable. De façon avantageuse, le corps 1 est réalisé par injection d'une matière plastique à base d'acide polylactique (PLA), dans la mesure où ce matériau, en plus d'être compostable et compatible avec les substances alimentaires, permet de réaliser facilement par injection des capsules à parois fines, et ne se déforme pas sous l'effet de la chaleur.

Pour préserver les qualités notamment organoleptiques de la substance servant à la préparation d'une boisson, il est nécessaire de la conditionner dans une capsule protégée contre l'oxygène et l'humidité de l'air.

Pour ce faire, la capsule est équipée d'au moins un film d'étanchéité 13 présentant au moins une couche 13a en matériau compostable selon la norme EN 13432, qui peut être biodégradable, et au moins une couche 13b de scellage sur le corps 1, ledit film d'étanchéité présentant un taux de transmission d'oxygène (OTA, pour l'anglais Oxygen Transmission Rate) d'au plus 5 cm³/m².jour.atm selon la norme ASTM F1927.

Ainsi, la capsule offre un bon compromis entre l'étanchéité, nécessaire à la bonne conservation de la substance qu'elle contient, et les propriétés de compostage permettant de faciliter le traitement des déchets qu'elle génère.

De façon avantageuse, le film d'étanchéité 13 est entièrement compostable et éventuellement biodégradable. En outre, le film d'étanchéité 13 présente un taux de transmission d'oxygène de l'ordre 1 cm³/m².jour.atm selon la norme ASTM F1927.

Le film d'étanchéité 13 peut en outre présenter au moins l'une des caractéristiques suivantes :
- une épaisseur comprise entre 15 µm et 100 µm, notamment comprise entre 20 µm et 30 µm ;
- un grammage compris entre 20 g/m² et 50 g/m², notamment compris entre 29 g/m² et 43 g/m² ;
- une perméabilité à la vapeur d'eau de l'ordre de 10 g/m².24h, notamment mesurée suivant la norme ASTM E96.

La couche compostable 13a peut être réalisée en un matériau transparent, notamment à base de fibres de cellulose, et/ou à base d'acide polylactique (PLA).

La couche de scellage 13b peut présenter des propriétés de barrière à l'humidité et/ou être réalisée à base d'acide polylactique (PLA). En outre, la couche de scellage 13b peut être adaptée au scellage à chaud et/ou à froid.

En relation avec la figure 3, le film d'étanchéité 13 présente en plus une couche extérieure 13c présentant des propriétés de barrière à l'oxygène et/ou à l'humidité. Cette couche extérieure 13c peut être métallisée, notamment avec de l'aluminium et/ou un oxyde d'aluminium (AIOx).

Le film d'étanchéité 13 peut également présenter une couche externe 13d présentant des propriétés de barrière à l'humidité, notamment à base d'acide polylactique (PLA). En particulier, comme représenté sur la figure 3, une telle couche 13d de barrière à l'humidité peut être rapportée sur la face extérieure de la couche compostable 13a, notamment en étant interposée entre ladite couche compostable et la couche métallisée 13c de barrière à l'oxygène et/ou à l'humidité.

Pour des raisons esthétiques et/ou commerciales, le film d'étanchéité 13 peut également présenter une couche supplémentaire pourvue d'une impression réalisée par dépôt d'encre sur une de ses faces, ladite impression comprenant par exemple une information textuelle et/ou un élément décoratif, tel que par exemple un logo, une marque, et/ou une description de la substance contenue dans la capsule. Une telle couche peut notamment être rapportée sur la face extérieure de la couche métallisée 13c représentée sur la figure 3.

En particulier, la couche d'impression peut être réalisée à base d'un matériau transparent, notamment à base de fibres de cellulose, l'encre d'impression étant déposée sur sa face intérieure. En outre, pour améliorer les qualités esthétiques de la capsule, la couche d'impression peut présenter des propriétés de brillance et/ou antistatiques.

Pour former le film d'étanchéité 13, les différentes couches 13a, 13b, 13c, 13d susmentionnées peuvent être assemblées au moyen d'un adhésif biodégradable, par exemple à base d'amidon de maïs, afin de faciliter l'élimination par compostage des déchets générés par la capsule.

Un film d'étanchéité 13 peut recouvrir la paroi latérale 3. Pour ce faire, comme représenté sur les figures 4 et 5, le film d'étanchéité 13 est utilisé pour réaliser une étiquette 14 en forme de secteur d'anneau circulaire dont les dimensions correspondent exactement à celles de la paroi latérale tronconique 3. Ainsi, comme représenté sur la figure 5, les bords latéraux 14a, 14b de l'étiquette 14 se rejoignent exactement sur une génératrice de la paroi latérale 3, ce qui permet d'éviter la formation entre lesdits bords d'un intervalle inesthétique et non étanche.

L'étiquette latérale 14 peut notamment être associée au corps 1 lors du moulage par injection dudit corps, suivant le procédé IML (pour l'anglais In-Mould Labelling). Pour ce faire, comme représenté sur les figures 6a et 6b, le moule M comprend une partie femelle Ma et une partie mâle Mb délimitant entre elles une cavité pour la formation du corps 1, lesdites parties présentant chacune des surfaces fonctionnelles avec une géométrie complémentaire de respectivement l'extérieur et l'intérieur dudit corps.

La partie femelle Ma présente une portion supérieure 15a de géométrie complémentaire à celle de la paroi latérale 3 et une portion inférieure 15b de géométrie complémentaire à celle du fond 2, l'étiquette latérale 3 étant disposée contre la portion supérieure 15a avant la mise en place de la partie mâle Mb et l'injection de la matière plastique formant le corps 1, afin de permettre l'intégration de ladite étiquette audit corps. En particulier, la partie femelle Ma présente un épaulement annulaire radial 16 formé à la jonction entre ses portions inférieure 15b et supérieure 15a, le bord inférieur 14c de l'étiquette 14 venant en butée contre ledit épaulement lors de la mise en place de ladite étiquette.

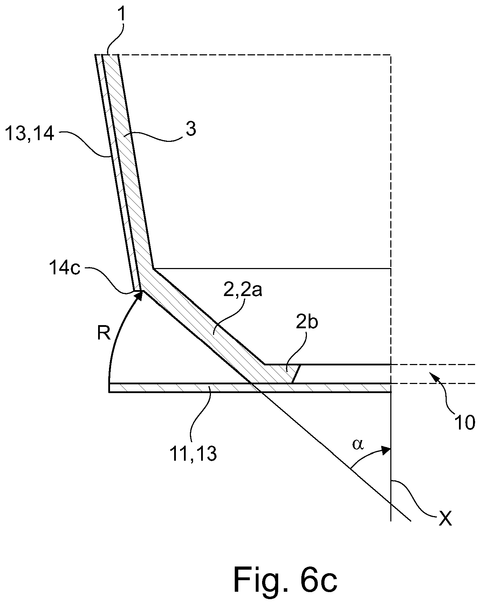

De façon avantageuse, un film d'étanchéité 13 peut également servir à la réalisation de l'opercule inférieur 11. En particulier, du fait de la présence du croisillon 12, l'opercule inférieur 11 peut être associé sur l'extérieur du fond 2, notamment par collage après injection du corps 1, comme représenté sur la figure 6c, ou durant ladite injection suivant le procédé IML, comme pour l'étiquette latérale 14. En variante, l'opercule inférieur 11 peut être associé sur l'intérieur du fond 2, notamment suivant le procédé IML susmentionné.

De façon avantageuse, la couronne supérieure 2a du fond 2 présente une géométrie tronconique, notamment avec un demi angle au sommet α compris entre 45° et 55°, qui rejoint le bord inférieur de la paroi latérale tronconique 3 par sa grande base. En outre, la couronne inférieure 2b du fond 2 est associée à la petite base de la couronne supérieure tronconique 2a et présente une forme annulaire plane entourant l'ouverture centrale 10.

Ainsi, la couronne supérieure 2a forme une surface régulière permettant une bonne couverture de l'ensemble du fond 2 par l'opercule inférieur 11. En particulier, l'opercule inférieur 11 peut être dimensionné de manière très précise pour pouvoir recouvrir exactement le fond 2 jusqu'à sa jonction avec la paroi latérale 3, ce qui permet d'éviter tout dépassement dudit opercule pouvant nuire à l'étanchéité de la capsule et/ou à la bonne mise en place de ladite capsule dans le logement d'une machine préparatrice de boissons.

Par ailleurs, un opercule inférieur 11 parfaitement dimensionné peut recouvrir le fond 2 de manière tendue avec un nombre minimal de plus, ce qui permet un perçage régulier et efficace dudit opercule par les picots du piston, afin de garantir une distribution régulière du liquide d'extraction dans toute la masse de la substance contenue dans la capsule.

De plus, la fixation de l'opercule inférieur 11 sur la couronne supérieure tronconique 2a garantit la tenue dudit opercule au-dessus de l'ouverture centrale 10, ce qui empêche le décrochage dudit opercule lors dudit perçage.

Pour pouvoir former un fond 2 avec de telles caractéristiques, la portion inférieure 15b de la partie femelle Ma présente une surface supérieure 17a tronconique et une surface inférieure 17b annulaire s'étendant radialement depuis le bord inférieur de ladite surface tronconique. Par ailleurs, la partie femelle Ma comprend une saillie circulaire 18 s'étendant au centre de la surface inférieure 17b pour délimiter l'ouverture centrale 10 pendant le moulage du corps 1.

Pour associer l'opercule inférieur 11 au fond 2, ledit opercule est d'abord solidarisé, notamment au moyen de sa couche de scellage 13b, sur la face inférieure de la couronne inférieure 2b, de manière à occulter l'ouverture centrale 10. Ensuite, la périphérie de l'opercule inférieur 11 est rabattue suivant la flèche R sur la couronne supérieure tronconique 2a jusqu'à la jonction avec la paroi latérale 3, c'est-à-dire jusqu'au niveau du bord inférieur 14c de l'étiquette latérale 14.

Une fois la capsule remplie avec la substance, l'ouverture supérieure 5 est occultée par mise en place, notamment par collage, d'un opercule supérieur sur la paroi supérieure 4a du rebord 4.

En particulier, l'opercule supérieur est agencé pour résister à la pression au moment de l'extraction, afin de permettre l'établissement d'une certaine pression dans la capsule lors de l'injection du liquide extracteur.

De façon avantageuse, l'opercule supérieur peut également être réalisé à partir du film d'étanchéité 13 susmentionné, afin d'améliorer la conservation de la substance dans la capsule et de faciliter le traitement des déchets générés par ladite capsule.

## Revendications

1. Capsule destinée à recevoir une substance pour la préparation d'une boisson, ladite capsule comprend un corps (1) en matériau compostable selon la norme EN 13432, et en ce qu'elle est équipée d'au moins un film d'étanchéité (13) présentant au moins une couche (13a) en matériau compostable et au moins une couche (13b) de scellage sur le corps (1), ladite capsule étant **caractérisée en ce qu'**elle comprend un film d'étanchéité présentant un taux de transmission d'oxygène d'au plus 5 cm³/m².jour.atm selon la norme ASTM F1927.

2. Capsule selon la revendication 1, **caractérisée en ce que** le film d'étanchéité (13) présente une épaisseur comprise entre 15 µm et 100 µm.

3. Capsule selon l'une des revendications 1 ou 2, **caractérisée en ce que** le film d'étanchéité (13) présente un taux de transmission d'oxygène de l'ordre de 1 cm³/m².jour.atm selon la norme ASTM F1927.

4. Capsule selon l'une quelconque des revendications 1 à 3, **caractérisée en ce que** le film d'étanchéité (13) est compostable.

5. Capsule selon l'une quelconque des revendications 1 à 4, **caractérisée en ce que** la couche compostable (13a) est réalisée en un matériau transparent.

6. Capsule selon l'une quelconque des revendications 1 à 5, **caractérisée en ce que** la couche compostable (13a) est réalisée à base de fibres de cellulose.

7. Capsule selon l'une quelconque des revendications 1 à 6, **caractérisée en ce que** la couche de scellage (13b) présente des propriétés de barrière à l'humidité.

8. Capsule selon l'une quelconque des revendications 1 à 7, **caractérisée en ce que** la couche compostable (13a) et/ou la couche de scellage (13b) est à base d'acide polylactique (PLA).

9. Capsule selon l'une quelconque des revendications 1 à 8, **caractérisée en ce que** le film d'étanchéité (13) comprend une couche externe (13d) présentant des propriétés de barrière à l'humidité.

10. Capsule selon l'une quelconque des revendications 1 à 9, **caractérisée en ce que** le film d'étanchéité (13) présente une couche extérieure (13c) présentant des propriétés de barrière à l'oxygène et/ou à l'humidité.

11. Capsule selon la revendication 10, **caractérisée en ce que** la couche extérieure (13c) de barrière à l'oxygène et/ou à l'humidité est une couche métallisée, notamment avec de l'aluminium ou un oxyde d'aluminium.

12. Capsule selon l'une quelconque des revendications 1 à 11, **caractérisée en ce que** le film d'étanchéité (13) comprend une couche qui présente une impression réalisée par dépôt d'encre sur une de ses faces.

13. Capsule selon la revendication 12, **caractérisée en ce que** la couche d'impression est réalisée à base d'un matériau transparent, notamment à base de fibres de cellulose, l'encre d'impression étant déposée sur sa face intérieure.

14. Capsule selon l'une quelconque des revendications 1 à 13, **caractérisée en ce que** le corps (1) présente un fond (2) et une paroi latérale (3) s'inscrivant globalement dans un tronc de cône, ainsi qu'un rebord (4) destiné à être couvert par un opercule après chargement de la substance dans la capsule.

15. Capsule selon la revendication 14, **caractérisée en ce qu'**un film d'étanchéité (13) recouvre la paroi latérale (3).

16. Capsule selon l'une des revendications 14 ou 15, **caractérisée en ce que** le fond (2) est pourvu d'une ouverture centrale (10), un film d'étanchéité (13) recouvrant ladite ouverture centrale.

17. Capsule selon l'une quelconque des revendications 14 à 16, **caractérisée en ce que** l'opercule est formé d'un film d'étanchéité (13).

## Patentansprüche

1. Kapsel, die dazu bestimmt ist, eine Substanz für die Zubereitung eines Getränks aufzunehmen, wobei die Kapsel einen Körper (1) aus kompostierbarem Material gemäß der Norm EN 13432 umfasst und dass sie mit mindestens einer Siegelfolie (13) ausgestattet ist, die mindestens eine Schicht (13a) aus kompostierbarem Material und mindestens eine Versiegelungsschicht (13b) auf dem Körper (1) aufweist, wobei die Kapsel **dadurch gekennzeichnet ist, dass** sie eine Siegelfolie umfasst, die eine Sauerstoffdurchlässigkeitsrate von nicht mehr als 5 cm³/m².Tag.atm gemäß der Norm ASTM F1927 aufweist.

2. Kapsel nach Anspruch 1, **dadurch gekennzeichnet, dass** die Siegelfolie (13) eine Dicke zwischen 15 µm und 100 µm aufweist.

3. Kapsel nach einem der Ansprüche 1 oder 2, **dadurch gekennzeichnet, dass** die Siegelfolie (13) eine Sauerstoffdurchlässigkeitsrate in der Größenordnung von 1 cm³/m².Tag.atm gemäß der Norm ASTM F1927 aufweist.

4. Kapsel nach einem der Ansprüche 1 bis 3, **dadurch gekennzeichnet, dass** die Siegelfolie (13) kompostierbar ist.

5. Kapsel nach einem der Ansprüche 1 bis 4, **dadurch gekennzeichnet, dass** die kompostierbare Schicht (13a) aus einem transparenten Material hergestellt ist.

6. Kapsel nach einem der Ansprüche 1 bis 5, **dadurch gekennzeichnet, dass** die kompostierbare Schicht (13a) aus Zellulosefasern hergestellt ist.

7. Kapsel nach einem der Ansprüche 1 bis 6, **dadurch gekennzeichnet, dass** die Versiegelungsschicht (13b) Eigenschaften einer Feuchtigkeitsbarriere aufweist.

8. Kapsel nach einem der Ansprüche 1 bis 7, **dadurch gekennzeichnet, dass** die kompostierbare Schicht (13a) und/oder die Versiegelungsschicht (13b) auf Polymilchsäure (PLA) basiert.

9. Kapsel nach einem der Ansprüche 1 bis 8, **dadurch gekennzeichnet, dass** die Siegelfolie (13) eine äußere Schicht (13d) umfasst, die Eigenschaften einer Feuchtigkeitsbarriere aufweist.

10. Kapsel nach einem der Ansprüche 1 bis 9, **dadurch gekennzeichnet, dass** die Siegelfolie (13) eine Außenschicht (13c) aufweist, die Eigenschaften einer Sauerstoff- und/oder einer Feuchtigkeitsbarriere aufweist.

11. Kapsel nach Anspruch 10, **dadurch gekennzeichnet, dass** die Außenschicht (13c) der Sauerstoff- und/oder der Feuchtigkeitsbarriere eine metallisierte Schicht ist, insbesondere mit Aluminium oder einem Aluminiumoxid.

12. Kapsel nach einem der Ansprüche 1 bis 11, **dadurch gekennzeichnet, dass** die Siegelfolie (13) eine Schicht umfasst, die einen Aufdruck aufweist, der durch das Aufbringen von Tinte auf einer ihrer Seiten hergestellt wird.

13. Kapsel nach Anspruch 12, **dadurch gekennzeichnet, dass** die Druckschicht aus einem transparenten Material, insbesondere aus Zellulosefasern, hergestellt ist, wobei die Druckfarbe auf ihrer Innenseite aufgebracht ist.

14. Kapsel nach einem der Ansprüche 1 bis 13, **dadurch gekennzeichnet, dass** der Körper (1) einen Boden (2) und eine Seitenwand (3), die sich insgesamt zu einem Kegelstumpf fügt, sowie einen Rand (4) aufweist, der dazu bestimmt ist, nach dem Befüllen der Kapsel mit der Substanz von einem Deckel abgedeckt zu werden.

15. Kapsel nach Anspruch 14, **dadurch gekennzeichnet, dass** eine Siegelfolie (13) die Seitenwand (3) bedeckt.

16. Kapsel nach einem der Ansprüche 14 oder 15, **dadurch gekennzeichnet, dass** der Boden (2) mit einer zentralen Öffnung (10) versehen ist, wobei eine Siegelfolie (13) die zentrale Öffnung bedeckt.

17. Kapsel nach einem der Ansprüche 14 bis 16, **dadurch gekennzeichnet, dass** der Deckel durch eine Siegelfolie (13) gebildet ist.

## Claims

1. Capsule designed to receive a substance for preparing a beverage, said capsule comprises a body (1) made of compostable material according to standard EN 13432, and in that it is equipped with at least one sealing film (13) having at least one layer (13a) made of compostable material and at least one sealing layer (13b) on the body (1), said capsule being **characterised in that** it is comprises a sealing film having an oxygen transmission rate of at most 5 cm³/m².day.atm according to standard ASTM F1927.

2. Capsule according to claim 1, **characterised in that** the sealing film (13) has a thickness between 15 µm and 100 µm.

3. Capsule according to one of the claims 1 or 2, **characterised in that** the sealing film (13) has an oxygen transmission rate of about 1 cm³/m².day.atm according to standard ASTM F1927.

4. Capsule according to one of the claims 1 to 3, **characterised in that** the sealing film (13) is compostable.

5. Capsule according to one of the claims 1 to 4, **characterised in that** the compostable layer (13a) is made from a transparent material.

6. Capsule according to one of the claims 1 to 5, **characterised in that** the compostable layer (13a) is made from cellulose fibres.

7. Capsule according to one of the claims 1 to 6, **characterised in that** the sealing layer (13b) has moisture barrier properties.

8. Capsule according to one of the claims 1 to 7, **characterised in that** the compostable layer (13a) and/or the sealing layer (13b) is/are based on polylactic acid (PLA) .

9. Capsule according to one of the claims 1 to 8, **characterised in that** the sealing film (13) comprises an external layer (13d) having moisture barrier properties.

10. Capsule according to one of the claims 1 to 9, **characterised in that** the sealing film (13) has an outer layer (13c) having oxygen and/or moisture barrier properties .

11. Capsule according to claim 10, **characterised in that** the outer layer (13c) of oxygen barrier and/or moisture barrier is a metallised layer, in particular made with aluminium or aluminium oxide.

12. Capsule according to one of the claims 1 to 11, **characterised in that** the sealing film (13) comprises a layer which presents an imprint formed by ink deposition onto one of its faces.

13. Capsule according to claim 12, **characterised in that** the printing layer is made from a transparent material, in particular based on cellulose fibres, the printing ink being deposited on its inner face.

14. Capsule according to one of the claims 1 to 13, **characterised in that** the body (1) has a base (2) and a lateral wall (3) which globally curves into a truncated cone, as well as an edge (4) designed to be covered by a lid after filling the capsule with the substance.

15. Capsule according to claim 14, **characterised in that** a sealing film (13) covers the lateral wall (3).

16. Capsule according to one of the claims 14 or 15, **characterised in that** the base (2) is provided with a central opening (10), a sealing film (13) covering said central opening.

17. Capsule according to one of the claims 14 to 16, **characterised in that** the lid is formed by a sealing film (13) .
